(19) **Europäisches Patentamt European Patent Office Office européen des brevets**

(11) **EP 4 521 682 A1**

(12) **EUROPEAN PATENT APPLICATION**

(43) Date of publication:
**12.03.2025 Bulletin 2025/11**

(21) Application number: **24161773.7**

(22) Date of filing: **06.03.2024**

(51) International Patent Classification (IPC):
*H04L 9/30* (2006.01)   *H04L 9/32* (2006.01)

(52) Cooperative Patent Classification (CPC):
**H04L 9/3093; H04L 9/3247**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 EP 23196281**

(71) Applicant: **Siemens Aktiengesellschaft
80333 München (DE)**

(72) Inventors:
• **Bauer, Sven
85591 Vaterstetten (DE)**
• **De Santis, Fabrizio
80634 München (DE)**

(74) Representative: **Siemens Patent Attorneys
Postfach 22 16 34
80506 München (DE)**

(54) **METHOD FOR SIGNATURE VERIFICATION OF A FALCON SIGNATURE**

(57)     The method for signature verification of a Falcon signature comprises steps as claimed.

The devices are configured to carry out the above-mentioned method.

EP 4 521 682 A1

## Description

The invention relates to a method for signature verification of a Falcon signature and to a computer program product and a device configured to carry out this method.

Embedded devices rely heavily on the verification of digital signatures to ensure the authenticity and integrity of data. During the boot process, the device verifies the digital signature of the firmware to ensure that it has not been tampered with or modified. Similarly, software updates are also verified using digital signatures to ensure that only authorized and unaltered software is installed.

Moreover, digital signatures are also used to verify the authenticity of a communication party. When two devices communicate with each other, they exchange digital certificates that include digital signatures. These signatures are then verified to confirm that both parties are authentic and have not been impersonated.

However, if an attacker manages to bypass or compromise the signature verification process, they can inject malicious code into the device or impersonate a legitimate communication party. This can lead to severe consequences, including data breaches, financial losses, and reputation damage. Therefore, it is crucial to ensure that signature verification is implemented securely and robustly in embedded devices.

In July 2022, the U.S. Department of Commerce's National Institute for Standard and Technology (NIST) selected three algorithms DILITHIUM [2], FALCON [3] and SPHINCS+ [4] for digital signatures as a replacement for RSA and elliptic curve based digital signatures [5]. In particular, FALCON is a good candidate for general purpose applications, because it offers smaller signatures than SPHINCS+.

However, there may be non-obvious attacks for FALCON verification routines that developers are likely to overlook. Consequently, these vulnerabilities may not be adequately protected by appropriate countermeasures in practice. This is especially important for post-quantum signature schemes, as they are relatively new and may not have been subject to the same level of scrutiny as more established schemes. By identifying and testing these attack vectors, we can help improve the security of these schemes and prevent potential attacks in the future.

Hence, in this context, it is the problem of the invention to provide an improved method for signature verification of a Falcon signature. In particular, this method is desired to be less affected by malicious attacks. Furthermore, it is a problem of the invention to provide a computer program product and to devices which are configured to carry out this method.

This problem of the invention is solved by methods with the features as claimed in claims 1, a computer program product as claimed in claim 4 and by a device as claimed in claim 5.

Preferred aspects of the invention are contained in the respective dependent claims and the subsequent description.

The method for signature verification of a Falcon signature according to the invention comprises the steps of

- considering a message with a Falcon signature with a bitstream signature component and one polynomial signature component,
- considering a public Falcon key, that corresponds to the Falcon signature, with a bitstream public key component
- in which an

  first auxiliary polynomial, that depends on the bitstream signature component is considered and an
  second auxiliary polynomial, that depends on the polynomial signature component is considered and

- in which an

  evaluation of a difference of the first auxiliary polynomial and a product of the second auxiliary polynomial and the bitstream public key component
  is substituted by an
  evaluation of a difference of a sum of the first auxiliary polynomial and a further summand in form of a random polynomial and a sum of the product of the second auxiliary polynomial and the bitstream public key component and the further summand in form of the random polynomial.

Advantageously, the previously described method for signature verification of a Falcon signature according to the invention is less affected by fault injection attacks compared to previously known methods.

The evaluation of a difference of the first auxiliary polynomial and a product of the second auxiliary polynomial and the bitstream public key component may be subject to a fault injection attack such, that the evaluation of the difference is stopped and the subtraction of the product of the second auxiliary polynomial and the bitstream public key component is omitted. With such an attack, the verification of a malicious Falcon signature may be erroneously carried out. In the invention, however, the addition of the random polynomial would distort the calculation if the evaluation of the difference is stopped and the minuend is not decreased by the subtrahend. Since to both the minuend and the subtrahend in the afore-mentioned difference, the same random polynomial is added in the method according to the invention, the random polynomial cancels out of the calculation if the difference is evaluated without injection attacks. In the case of an injection attack, that prohibits the subtraction of the subtrahend, the random polynomial does not cancel out. This leads to the inability to verify malicious Falcon signatures with such an attack. Thus, according to the invention, the method for signature verification is more robust against fault injection attacks and thus improved.

In another advantageous and optional aspect of the invention, the random polynomial is a pseudo-random polynomial.

Alternatively, and also preferably, in the method according to the invention, the random polynomial is a physically derived, preferably a noise-based or noise-derived, random polynomial.

The device according to the invention comprises a processor, preferably a microprocessor, and is configured to carry out the method according to the invention as described above.

In a preferable and optional aspect of the invention, the device is an embedded device.

In an advantageous and optional aspect of the invention, the device is a manufacturing device and/or a logistics device and/or an Internet-of-things device, preferably an industrial-internet-of-things device.

In the following, specific embodiments for carrying out the invention are described.

This application shows as examples a number of non-trivial, yet in practice simple and realistic fault injection attacks against the verification routines of the post-quantum signature schemes.

FALCON. The attacks target parts of the code which even an experienced developer would not necessarily consider protecting against, making it difficult to defend against such attacks. Consequently, an attacker can trick a device into processing arbitrary unauthenticated data, and hence possibly even into installing software supplied by the attacker. If signature verification during the establishment of a secure communication session is attacked, the attacker can force the device to communicate with an unauthenticated party.

The following description gives a description of the FALCON signature scheme. Subsequently, we show how to attack FALCON signature verification. A practical evaluation of the proposed attacks is provided thereafter. Possible countermeasures to protect against the proposed fault attacks with the methods according to the invention are described subsequently.

FALCON SIGNATURE VERIFICATION

We describe the signature verification procedure of FALCON. For a full description of the FALCON signature scheme, we refer the reader to the specification of FALCON in [3].

There are two variants of FALCON, namely FALCON-512 and FALCON-1024. The two variants target different security levels.

Their mathematical descriptions differ only in the choice of some parameters. Most mathematical operations in FALCON signature verification are happening in a truncated polynomial ring $\mathbb{Z}q[x]/(\phi)$. Here, $q = 12289$ (a prime number) and $\phi(x) = x^n + 1$. We have $n = 512$ for FALCON-512 and $n = 1024$ for FALCON-1024. Another parameter is a rejection bound, which is $\lfloor \beta^2 \rfloor = 34034726$ for FALCON-512 and $\lfloor \beta^2 \rfloor = 70265242$ for FALCON-1024.

A message m in FALCON is simply a string of bytes. A FALCON signature is a pair $(r,s)$, where $r$ is a random 320 bit string and s is the representation of a polynomial $s_2 \in \mathbb{Z}q[x]/(\phi)$. A FALCON public key is a polynomial $h \in \mathbb{Z}q[x]/(\phi)$.

As auxiliary functions for signature verification we will need a function **HashToPoint** that maps a byte string to a polynomial in $\mathbb{Z}q[x]/(\phi)$ and a function **Decompress** that recovers a polynomial $\mathbb{Z}q[x]/(\phi)$ from its representation as a string of bytes.

Algorithm 2 FALCON.VERIFY($m$, sig, pk)

Require: A message $m$, a signature sig = $(r,s)$, a public key pk = $h \in \mathbb{Z}q[x]/(\phi)$

Ensure: Accept or reject

1:        $c \leftarrow$ HashToPoint($r\|m$)

2:        $s_2 \leftarrow$ Decompress($s$)

3:      **if** $s_2 = \perp$ **then**

4:              reject

5:        $s_1 \leftarrow c - s_2 h \bmod q$

6:      **if** $\|(s_1,s_2)\|^2 \leq \lfloor\beta^2\rfloor$ **then**

7:              **accept**

8:      **else**

9:      reject

FAULT ATTACKS AGAINST FALCON SIGNATURE VERIFICATION

The most obvious target for fault attack against FALCON signature verification is the comparison $\|(s_1,s_2)\| < \beta^2$. The goal of the attack is to inject a fault such that the test passes for an arbitrary $(s_1,s_2)$.

However, because this is the most obvious place to attack, it is also a part of the code that a careful designer most likely implements with appropriate countermeasures against this type of attack. In this section, we are considering attacks which are less obvious and less likely to be prevented by countermeasures in the implementation.

We assume the attacker has a valid signature $(r,s)$ for some message $m$. Every attack starts with the attacker choosing a message $m'$. All attacks aim at constructing a (forged) signature such that it only takes a fault that can be injected with high probability to force the verifying device into accepting the signature and hence processing $m'$.

*A. Skipping the inclusion of the message hash*

For our first attack against FALCON signature verification, the attacker performs the following steps:

1) The attacker chooses $r'$ to be an arbitrary string of 320 bits and sets $s' := \text{Compress}(0, n - 328)$, where $n = 512$ for FALCON-512 and $n = 1024$ for FALCON-1024. So $s'$ is the compressed representation of the zeropolynomial.
2) The attacker sends the message $m'$ and the purported signature $(r',s')$ to the device for verification.
3) During the verification procedure, the attacker injects a fault to suppress the inclusion of c in algorithm 2, line 5. So the device computes $s'_1 \leftarrow - s'_2 h \bmod q = 0$, because $s'_2$ is 0 by construction.

If the fault injection is successful, the check in line 6 becomes a check that $\lfloor\beta^2\rfloor \geq |(s'_1, s'_2)| = 0$. This check obviously passes, and the device accepts the signature and starts processing $m'$.

Alternatively, the attacker could force the parameter logn in a respective computer code to 0 as it is transferred to a parameter register or pushed onto the stack just before the function call.

This could be achieved by skipping the corresponding instruction (if the parameter register happens to be 0 anyway) or by a data fault rather than an instruction fault.

We note that this attack does not work when FALCON is operated in key-recovery mode, see the FALCON-specification, section 3.12 in [3].

*B. Fault injection during the computation of the Euclidean norm*

This fault injection attack targets the computation of the Euclidean norm in algorithm 2, line 6. Now let $i > 0$ be the smallest index such that $h_i \neq 0$. Please note that such an $i$ exists unless the public key $h$ consists only of a constant term.

So the public key $h$ has the form:

$$h(x) = h_0 + \sum_{k=i}^{n-1} h_k x^k . \qquad (4)$$

We first explain how the attacker proceeds and then show why the attack works:

1) The attacker chooses a polynomial $s_2' \in \mathbb{Z}_q/(\phi)$ with $s_{2,i}' = c_0 h_{n-i}^{-1}$ and $s_{2,j} = 0$ for $j \neq i$.

2) The attacker chooses a random 320 bit string $r'$ and sets $s' := \text{Compress}(s_2', 8 * \text{sbytelen} - 328)$ and sends the chosen message $m'$ together with the purported signature $(r',s')$ to the device for processing.

3) The attacker injects a fault such that the computation of the Euclidean length in line 6 stops after processing the 0-th coefficient. We have described examples of suitable faults at the beginning of this section.

To understand why this attack works (assuming, of course, that the fault injection is successful), we carefully follow the steps of the signature verification process. First, the device computes $c' \leftarrow \text{HashToPoint(fIlm',q,n)}$ and decompresses $s'$ to recover the $s_2'$ the attacker has constructed in the first step of the attack.

Next, the device computes $s_1' \leftarrow c' - s_2'h$. If we look at the 0-th coefficient of the polynomial $s_1'$, we see that

$$s_{1,0}' = c_0' - s_{2,i}' h_{n-i} = c_0' - c_0 h_{n-i}^{-1} h_{n-1} = 0, \quad (5)$$

because of the way the attacker has constructed $s_2'$.

If the fault injection in the last step of the attack is successful, then the device computes the Euclidean norm of $(s_1',s_2')$ as

$$s_{1,0}'^2 + s_{2,0}'^2 = 0 + 0 = 0, \qquad (6)$$

because the fault terminates the loop after the first iteration and other coefficients of $s_1'$ and $s_2'$ are ignored.

Hence, the norm is short enough for the device to accept the purported signature, and the device will process rri like a valid message.

Of course, $s_{1,0}'$ does not have to be zero, it is sufficient if $s_{1,0}'^2 \leq \lfloor \beta^2 \rfloor$. This is the case with some probability anyway. So, instead of constructing $s_2'$ as above, an attacker can also choose $s_2' = 0$ and then try different $r'$ until $c_0'^2 \leq \backslash \lfloor \beta^2 \rfloor$, with $c' = \text{HashToPoint}(r'\|m')$. We see from line 5 in algorithm 2 that then $s_{1,0}'^2 = c_0'^2 \leq \lfloor \beta^2 \rfloor$. Because $\lfloor \beta^2 \rfloor$ is larger for FALCON-1024 than for FALCON-512, this simplified version of the attack is easier for FALCON-1024.

More precisely, we see that for FALCON-512 we have to have $c_0'^2 \leq 34\,034\,726$ and hence $0 \leq c_0' \leq 5\,833$ and for FALCON-1024 we have to have $c_0'^2 \leq 70\,265\,242$ and hence $0 \leq c_0' \leq 8\,382$. Note that $0 \leq c_0' < q = 13329$ anyway.

COUNTERMEASURES

Obviously, generic countermeasures against manipulation of the control flow, e.g., hardware instruction skip, make most of the attacks presented in this application more difficult to realize in practice.

However, there are also more specific countermeasures that can be implemented to thwart our attacks.

For instance, against the attack described previously, one can proceed as follows: A countermeasure can be used against the attack described in the previous description. We modify the implementation of algorithm 2 to generate a random $u \in \mathbb{Z}q[x]/(\phi)$.

Then $u$ is added to c and to $s_2h$. Consequently, line 5 in algorithm 2 becomes

$$s_1 \leftarrow (c + u) - (s_2 h + u) \bmod q. \qquad (8)$$

If the attacker skips the inclusion of $c + u$ in this operation, then the test in line 6 will fail with very high probability. Finally, by checking the integrity of function parameters and introducing redundant loop counters seem to be efficient countermeasures against the attack described above.

The countermeasures as described in equations (7) and (8) implement the methods according to the invention.

As an example, these modified signature verification methods are implemented in an embedded device that is configured to carry out these steps for the modified signature verification as a computer program running on a microprocessor.

Prior Art References

[1] J. A. Muir, "Seifert's RSA fault attack: Simplified analysis and generalizations," in ICICS 06, ser. LNCS, P. Ning, S. Qing, and N. Li, Eds., vol. 4307. Springer, Heidelberg, Dec. 2006, pp. 420-434.

[2] V. Lyubashevsky, L. Ducas, E. Kiltz, T. Lepoint, P. Schwabe, G. Seiler, D. Stehle, and S. Bai, "CRYSTALS-DILITHIUM," Na-' tional Institute of Standards and Technology, Tech. Rep., 2022, available at https://csrc.nist.gov/ Projects/post-quantum-cryptography/ selected-algorithms-2022.

[3] T. Prest, P.-A. Fouque, J. Hoffstein, P. Kirchner, V. Lyubashevsky, T. Pornin, T. Ricosset, G. Seiler, W. Whyte, and Z. Zhang, "FALCON," National Institute of Standards and Technology, Tech. Rep., 2022, available at https://csrc.nist. gov/Projects/post-quantum-cryptography/ selected-algorithms-2022.

[4] A. Hulsing, D. J. Bernstein, C. Dobraunig, M. Eichlseder, S. Fluhrer,¨ S.-L. Gazdag, P. Kampanakis, S. Kolbl, T. Lange, M. M. Lau-¨ ridsen, F. Mendel, R. Niederhagen, C. Rechberger, J. Rijneveld, P. Schwabe, J.-P. Aumasson, B. Westerbaan, and W. Beullens, "SPHINCS+," National Institute of Standards and Technology, Tech. Rep., 2022, available at https://csrc.nist.gov/Projects/post-quantumcryptography/selected-algorithms-2022.

[5] NIST, "NIST announces first four quantum-resistant cryptographic algorithms," https://www.nist.gov/news-events/ news/2022/07/nistannounces-first-four-quantum-resistant-cryptographic-algorithms, 2022, accessed 2022-12-21.

[6] N. Moro, K. Heydemann, E. Encrenaz, and B. Robisson, "Formal verification of a software countermeasure against instruction skip attacks," Cryptology ePrint Archive, Report 2013/679, 2013, https:// eprint.iacr.org/2013/679.

[7] J.-M. Dutertre, T. Riom, O. Potin, and J.-B. Rigaud, "Experimental analysis of the laser-induced instruction skip fault model," accessed 202305-03. [Online]. Available: https://hal.science/hal-02379754/document

[8] A. Menu, J.-M. Dutertre, O. Potin, J.-B. Rigaud, and J.-L. Danger, "Experimental analysis of the electromagnetic instruction skip fault model," accessed 2023-05-03. [Online]. Available: https: //hal.science/hal-02572398/document

[9] J.-P. Seifert, "On authenticated computing and rsa-based authentication," in Proceedings of the 12th ACM Conference on Computer and Communications Security, ser. CCS '05. New York, NY, USA: Association for Computing Machinery, 2005, p. 122-127. [Online]. Available: https://doi.org/10.1145/1102120.1102138

[10] L. G. Bruinderink and P. Pessl, "Differential fault attacks on deterministic lattice signatures," IACR TCHES, vol. 2018, no. 3, pp. 21-43, 2018, https://tches.iacr.org/index.php/TCHES/article/view/7267.

[11] S. McCarthy, J. Howe, N. Smyth, S. Brannigan, and M. O'Neill, "BEARZ attack FALCON: Implementation attacks with countermeasures on the FALCON signature scheme," Cryptology ePrint Archive, Report 2019/478, 2019, https:// eprint.iacr.org/2019/478.

[12] S. Bauer and F. D. Santis, "A differential fault attack against deterministic falcon signatures," Cryptology ePrint Archive, Paper 2023/422, 2023, https://eprint.iacr.org/2023/422. [Online]. Available: https://eprint.iacr.org/2023/422

[13] N. Bindel, J. Buchmann, and J. Kramer, "Lattice-based signature" schemes and their sensitivity to fault attacks," Cryptology ePrint Archive, Report 2016/415, 2016, https://eprint.iacr.org/2016/415.

[14] P. Ravi, A. Chattopadhyay, and A. Baksi, "Side-channel and faultinjection attacks over lattice-based post-quantum schemes (kyber, dilithium): Survey and new results," Cryptology ePrint Archive, Report 2022/737, 2022, https://eprint.iacr.org/2022/737.

[15] P. Ravi, B. Yang, S. Bhasin, F. Zhang, and A. Chattopadhyay, "Fiddling the twiddle constants - fault injection analysis of the number theoretic transform," IACR TCHES, vol. 2023, no. 2, pp. 447-481, 2023.

[16] NIST, "Submission Requirements and Evaluation Criteria for the Post-Quantum Cryptography Standardization Process," 2016, accessed 2023-05-09. [Online]. Available:https://csrc.nist.gov/CSRC/media/Projects/Post-Quantum-Cryptography/documents/call-for-proposals-final-dec-2016.pdf

[17] M. J. Kannwischer, J. Rijneveld, P. Schwabe, and K. Stoffelen, "pqm4: Testing and benchmarking NIST PQC on ARM cortex-M4," Cryptology ePrint Archive, Report 2019/844, 2019, https://eprint.iacr.org/2019/844.

[18] G. Seiler, T. Lepoint, B. Hess, M. Baentsch, P. Schwabe, B. Westerbaan, V. Hanquez, M. J. Kannwischer, oittaa, J.

Schanck, and zanxu-blackhorse, "Dilithium reference implementation v3.1 on github," accessed 2023-04-28. [Online]. Available: https://github.com/pq-crystals/dilithium/tree/v3.1

[19] T. Pornin, "Falcon source files (reference implementation) vrfy.c," accessed 2023-05-03. [Online]. Available: https://falcon-sign.info/impl/ vrfy.c.html

[20] D. Lazar, C. Peikert, and algoidan, "Deterministic falcon implementation," https://github.com/algorand/falcon, Accessed 2022-11-17.

[21] O. M. Guillen, M. Gruber, and F. De Santis, "Low-cost setup for localized semi-invasive optical fault injection attacks - how low can we go?" in COSADE 2017, ser. LNCS, S. Guilley, Ed., vol. 10348. Springer, Heidelberg, Apr. 2017, pp. 207-222.

[22] T. Espitau, P.-A. Fouque, F. Gerard, M. Rossi, A. Takahashi, M. Ti-' bouchi, A. Wallet, and Y. Yu, "Mitaka: a simpler, parallelizable, maskable variant of falcon," Cryptology ePrint Archive, Report 2021/1486, 2021, https://eprint.iacr.org/ 2021/1486.

[23] C. Chuengsatiansup, T. Prest, D. Stehle, A. Wallet, and K. Xagawa,' "ModFalcon: Compact signatures based on module-NTRU lattices," in ASIACCS 20, H.-M. Sun, S.-P. Shieh, G. Gu, and G. Ateniese, Eds. ACM Press, Oct. 2020, pp. 853-866.

## Claims

1. Method for signature verification of a Falcon signature, comprising the steps of

    - considering a message with a Falcon signature with a bitstream signature component and one polynomial signature component,
    - considering a public Falcon key, that corresponds to the Falcon signature, with a bitstream public key component
    - in which an

        first auxiliary polynomial, that depends on the bitstream signature component is considered and an
        second auxiliary polynomial, that depends on the polynomial signature component is considered and

    - in which an

        evaluation of a difference of the first auxiliary polynomial and a product of the second auxiliary polynomial and the bitstream public key component
        is substituted by an
        evaluation of a difference of a sum of the first auxiliary polynomial and a further summand in form of a random polynomial and a sum of the product of the second auxiliary polynomial and a sum of the bitstream public key component and the further summand.

2. Method according to claim 1, in which the random polynomial is a pseudo-random polynomial.

3. Method according to claim 2, in which the random polynomial is a physically derived, preferably a noise-based or noise-derived, random polynomial.

4. Computer program product, comprising program commands, that, when run on a computer, are configured to carry out the method according to one of the previous claims.

5. Device, comprising a processor, preferably a microprocessor, configured to carry out the method according to one of the preceding claims.

6. Device according to one of the previous claims with a computer program product according to claim 4, that is configured to run on the processor.

7. Device according to claim 5 or 6, which is an embedded device.

8. Device according to claim 5, 6 or 7, which is a manufacturing device.

9. Device according to one of the claims 5 to 8, which is a logistics device.

**10.** Device according to one of the claims 5 to 9, which is an Internet-of-things device, preferably an industrial-internet-of-things device.

# EUROPEAN SEARCH REPORT

**Application Number**

EP 24 16 1773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SARAH MCCARTHY ET AL: "BEARZ Attack FALCON: Implementation Attacks with Countermeasures on the FALCON signature scheme", IACR, INTERNATIONAL ASSOCIATION FOR CRYPTOLOGIC RESEARCH , vol. 20190518:192108 18 May 2019 (2019-05-18), pages 1-12, XP061032705, Retrieved from the Internet: URL:http://eprint.iacr.org/2019/478.pdf [retrieved on 2019-05-18] * Section 2.2, Algorithms 1-3 and Section 4 * | 1-10 | INV. H04L9/30 H04L9/32 |
| A | SVEN BAUER ET AL: "A Differential Fault Attack against Deterministic Falcon Signatures", IACR, INTERNATIONAL ASSOCIATION FOR CRYPTOLOGIC RESEARCH , vol. 20230323:174927 23 March 2023 (2023-03-23), pages 1-17, XP061077270, Retrieved from the Internet: URL:https://eprint.iacr.org/archive/2023/422/1679593767.pdf [retrieved on 2023-03-24] * Section 3, 4, 6 * | 1-10 | TECHNICAL FIELDS SEARCHED (IPC) H04L |

The present search report has been drawn up for all claims

| Place of search | Date of completion of the search | Examiner |
|---|---|---|
| Munich | 2 August 2024 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Seifert's RSA fault attack: Simplified analysis and generalizations. **J. A. MUIR**. ICICS 06, ser. LNCS. Springer, December 2006, vol. 4307, 420-434
- **V. LYUBASHEVSKY** ; **L. DUCAS** ; **E. KILTZ** ; **T. LEPOINT** ; **P. SCHWABE** ; **G. SEILER** ; **D. STEHLE** ; **S. BAI**. CRYSTALS-DILITHIUM. *Na-'tional Institute of Standards and Technology, Tech. Rep.*, 2022, https://csrc.nist.gov/Projects/post-quantum-cryptography/ selected-algorithms-2022
- **T. PREST** ; **P.-A. FOUQUE** ; **J. HOFFSTEIN** ; **P. KIRCHNER** ; **V. LYUBASHEVSKY** ; **T. PORNIN** ; **T. RICOSSET** ; **G. SEILER** ; **W. WHYTE** ; **Z. ZHANG**. FALCON. *National Institute of Standards and Technology, Tech. Rep.*, 2022, https://csrc.nist.gov/Projects/post-quantum-cryptography/ selected-algorithms-2022
- **A. HULSING** ; **D. J. BERNSTEIN** ; **C. DOBRAUNIG** ; **M. EICHLSEDER** ; **S. FLUHRER** ; **S.-L. GAZDAG** ; **P. KAMPANAKIS** ; **S. KOLBL** ; **T. LANGE** ; **M. M. LAU**. SPHINCS. *National Institute of Standards and Technology, Tech. Rep.*, 2022, https://csrc.nist.gov/-Projects/post-quantumcryptography/selected-algorithms-2022
- *NIST announces first four quantum-resistant cryptographic algorithms*, 21 December 2022, https://www.nist.gov/news-events/news/2022/07/nistannounces-first-four-quantum-resistant-cryptographic-algorithms
- **N. MORO** ; **K. HEYDEMANN** ; **E. ENCRENAZ** ; **B. ROBISSON**. Formal verification of a software countermeasure against instruction skip attacks. *Cryptology ePrint Archive, Report 2013/679*, 2013, https://eprint.iacr.org/2013/679
- **J.-M. DUTERTRE** ; **T. RIOM** ; **O. POTIN** ; **J.-B. RIGAUD**. *Experimental analysis of the laser-induced instruction skip fault model*, 03 May 2023, https://hal.science/hal-02379754/document
- **A. MENU** ; **J.-M. DUTERTRE** ; **O. POTIN** ; **J.-B. RIGAUD** ; **J.-L. DANGER**. *Experimental analysis of the electromagnetic instruction skip fault model*, 03 May 2023, https: //hal.science/hal-02572398/document
- On authenticated computing and rsa-based authentication. **J.-P. SEIFERT**. Proceedings of the 12th ACM Conference on Computer and Communications Security, ser. CCS '05. Association for Computing Machinery, 2005, 122-127

- **L. G. BRUINDERINK** ; **P. PESSL**. Differential fault attacks on deterministic lattice signatures. *IACR TCHES*, 2018, vol. 2018 (3), 21-43, https://tches.iacr.org/index.php/TCHES/article/view/7267
- **S. MCCARTHY** ; **J. HOWE** ; **N. SMYTH** ; **S. BRANNIGAN** ; **M. O'NEILL**. BEARZ attack FALCON: Implementation attacks with countermeasures on the FALCON signature scheme. *Cryptology ePrint Archive, Report 2019/478*, 2019, https://eprint.iacr.org/2019/478
- **S. BAUER** ; **F. D. SANTIS**. A differential fault attack against deterministic falcon signatures. *Cryptology ePrint Archive, Paper 2023/422*, 2023, https://eprint.iacr.org/2023/422
- **N. BINDEL** ; **J. BUCHMANN** ; **J. KRAMER**. Lattice-based signature'' schemes and their sensitivity to fault attacks. *Cryptology ePrint Archive, Report 2016/415*, 2016, https://eprint.iacr.org/2016/415
- **P. RAVI** ; **A. CHATTOPADHYAY** ; **A. BAKSI**. Side-channel and faultinjection attacks over lattice-based post-quantum schemes (kyber, dilithium): Survey and new results. *Cryptology ePrint Archive, Report 2022/737*, 2022, https://eprint.iacr.org/2022/737
- **P. RAVI** ; **B. YANG** ; **S. BHASIN** ; **F. ZHANG** ; **A. CHATTOPADHYAY**. Fiddling the twiddle constants - fault injection analysis of the number theoretic transform. *IACR TCHES*, 2023, vol. 2023 (2), 447-481
- *Submission Requirements and Evaluation Criteria for the Post-Quantum Cryptography Standardization Process*, 2016, https://csrc.nist.gov/CSRC/media/-Projects/Post-Quantum-Cryptography/documents/-call-for-proposals-final-dec-2016.pdf
- **M. J. KANNWISCHER** ; **J. RIJNEVELD** ; **P. SCHWABE** ; **K. STOFFELEN**. pqm4: Testing and benchmarking NIST PQC on ARM cortex-M4. *Cryptology ePrint Archive, Report 2019/844*, 2019, https://eprint.iacr.org/2019/844
- **G. SEILER** ; **T. LEPOINT** ; **B. HESS** ; **M. BAENTSCH** ; **P. SCHWABE** ; **B. WESTERBAAN** ; **V. HANQUEZ** ; **M. J. KANNWISCHER** ; **OITTAA, J. SCHANCK** ; **ZANXU-BLACKHORSE**. *Dilithium reference implementation v3.1 on github*, 28 April 2023, https://github.com/pq-crystals/dilithium/tree/v3.1

- **T. PORNIN**. *Falcon source files (reference implementation) vrfy.c*, 03 May 2023, https://falcon-sign. info/impl/ vrfy.c.html
- **D. LAZAR** ; **C. PEIKERT** ; **ALGOIDAN**. *Deterministic falcon implementation*, 17 November 2022, https://github.com/algorand/falcon
- Low-cost setup for localized semi-invasive optical fault injection attacks - how low can we go?. **O. M. GUILLEN** ; **M. GRUBER** ; **F. DE SANTIS**. COSADE 2017, ser. LNCS. Springer, April 2017, vol. 10348, 207-222
- **T. ESPITAU** ; **P.-A. FOUQUE** ; **F. GERARD** ; **M. ROSSI** ; **A. TAKAHASHI** ; **M. TI-' BOUCHI** ; **A. WALLET** ; **Y. YU**. Mitaka: a simpler, parallelizable, maskable variant of falcon. *Cryptology ePrint Archive, Report 2021/1486*, 2021, https://eprint.iacr. org/2021/1486
- ModFalcon: Compact signatures based on module-NTRU lattices. **C. CHUENGSATIANSUP** ; **T. PREST** ; **D. STEHLE** ; **A. WALLET** ; **K. XAGAWA**. ASIACCS 20. ACM Press, October 2020, 853-866